# FASCICULE DE BREVET EUROPEEN

(11) **EP 3 221 571 B1**
(45) Date de publication et mention de la délivrance du brevet: **26.09.2018**
(21) Numéro de dépôt: 15805606.9
(22) Date de dépôt: 20.11.2015
(51) Int. Cl.: F02C 6/08, F02C 7/28, F01D 17/10, F04D 27/02

(54) **DISPOSITIF FORMANT JOINT D'ÉTANCHÉITÉ POUR UNE VANNE DE DÉCHARGE DANS UNE TURBOMACHINE**
VORRICHTUNG ZUR HERSTELLUNG EINER DICHTUNG FÜR EIN ENTLASTUNGSVENTIL IN EINEM TURBINENMOTOR
DEVICE FORMING A SEAL FOR A RELIEF VALVE IN A TURBINE ENGINE

(30) Priorité: 21.11.2014 FR 1461284
(43) Date de publication de la demande: 27.09.2017
(73) Titulaire: Trelleborg Sealing Solutions France, 78600 Maisons Laffitte (FR)
(72) Inventeur: DE LUCA, Michael, 94400 Vitry Sur Seine (FR)
(74) Mandataire: IP Trust
(86) Numéro de dépôt international: PCT/FR2015/053160
(87) Numéro de publication internationale: WO 2016/079454

(56) Documents cités:
- EP-A1- 0 374 004
- GB-A- 2 245 656

## Description

### Domaine technique de l'invention

L'invention concerne un joint d'étanchéité pour une vanne de décharge d'une turbomachine.

Plus particulièrement, le domaine de l'invention est celui de joints d'étanchéité pour vannes de décharge de turbomachines à double flux, telles qu'une turbine industrielle, ou bien une turbine, un turboréacteur ou un turbopropulseur aéronautiques.

Des vannes de décharge de turbomachines sont en général montées sur le carter intermédiaire de la turbomachine, entre le compresseur basse-pression et le compresseur haute-pression, dans un espace annulaire s'étendant entre la veine d'écoulement du flux primaire et la veine d'écoulement du flux secondaire.

Ces vannes de décharge sont régulièrement réparties autour de l'axe longitudinal de la turbomachine et comprennent chacune une porte déplaçable par rapport au carter intermédiaire, entre une position d'obturation d'un orifice de passage d'air formé dans le carter intermédiaire et une position d'ouverture de cet orifice.

L'ouverture de ces portes permet d'évacuer une partie de l'air du flux primaire dans certaines conditions de fonctionnement de la turbomachine, cet air étant réinjecté dans le flux secondaire et/ou alimentant des systèmes de refroidissement et/ou de ventilation de composants de la turbomachine et/ou autorisant l'expulsion de débris qui pourraient impacter les zones sensibles de la turbomachine.

Dans certaines réalisations, les portes des vannes de décharge ont une forme sensiblement parallélépipédique et les orifices correspondants du carter intermédiaire ont une forme sensiblement complémentaire de celle des portes.

Un joint d'étanchéité en élastomère ayant une forme généralement en U s'étend le long des bords périphériques latéraux et aval de chaque porte et est destiné à coopérer avec une partie correspondante du bord de l'orifice du carter intermédiaire pour assurer l'étanchéité autour de la porte dans sa position de fermeture de cet orifice. Un autre joint également en élastomère et de forme sensiblement rectiligne complète le contour de la porte pour assurer l'étanchéité autour de la porte dans sa position de fermeture de cet orifice.

### Etat de la technique et ses inconvénients

Conformément au document FR 2 923 541, un joint en forme de U de ce type est fixé sur le carter intermédiaire par une plaque en forme de U venant s'appliquer contre une partie plane en forme de langue du joint, et fixée dans cette position plaquée au moyen de rivets traversant la plaque et la langue du joint.

Le joint est ainsi maintenu serré sur le bord périphérique de la porte. La porte et la plaque sont en général réalisées en matériau métallique, par exemple en aluminium ou en titane.

Ce type de joint et son système de fixation au carter donnent généralement satisfaction.

Des documents EP0374004 et GB2245656 des autres joints sont connus.

Cependant, l'augmentation des exigences en matière de limitation de la création de débris par exemple sur arrachement accidentel du joint, encourage la recherche d'un système de fixation sans outillage, et sans pièce rapportées.

Pour autant, le système d'accroche du joint au carter répondant à ce critère devra rester suffisamment performant et robuste pour demeurer compatible avec le domaine d'application où les contraintes exercées sur ce joint lors de la fermeture et de l'ouverture de la porte, sont importantes.

### Exposé de l'invention

L'invention vise à résoudre ce problème en proposant un dispositif de joint d'étanchéité pour vanne de décharge de turbomachine réduisant les risques de création de débris sur arrachement accidentel du joint tout en bénéficiant d'un système de fixation au carter, répondant à des critères de robustesse élevés.

A cet effet, l'invention concerne un dispositif formant un joint d'étanchéité pour une vanne de décharge dans une turbomachine, la vanne comprenant une porte destinée à être montée mobile entre une position d'obturation d'un orifice de passage d'air réalisé au sein d'un carter de la turbomachine et une position d'ouverture de cet orifice.

Selon l'invention, le dispositif comprend :
- un ensemble de joint d'étanchéité s'étendant le long du bord périphérique de la porte dans sa position d'obturation, le joint comprenant :
   ∘ un corps principal destiné à s'interposer entre le bord périphérique de la porte et le carter et
   ∘ au moins une protubérance de fixation s'étendant à partir d'au moins une portion du corps principal et participant à la fixation du joint sur le carter du moteur,
   ∘ ladite protubérance étant destinée à s'engager dans une encoche complémentaire réalisée dans le carter.

La particularité du joint selon l'invention réside notamment dans la présence de protubérances permettant la fixation de portions correspondantes du joint au carter du moteur, lorsque ces protubérances s'engagent dans des encoches complémentaires réalisées dans le carter.

Ainsi, le joint selon l'invention ne nécessite pour les parties de joint pourvues de protubérances, aucun élément de fixation rapporté type porte-joint ou rivet et diminue les risques de création de débris sur arrachement accidentel du joint.

Le joint selon l'invention peut par ailleurs présenter l'une et/ou l'autre des caractéristiques suivantes :
- le dispositif comprend un premier joint comprenant un corps principal en forme de U et dont les deux portions latérales opposées sont prolongées chacune par une protubérance de fixation
- la protubérance s'étend sur une partie seulement des deux portions latérales du premier joint
- la protubérance présente en section transversale une forme de L ou de T dont les portions latérales sont destinées à venir en prise sous une paroi correspondante du carter
- la protubérance comprend une portion élargie empêchant le coulissement du joint dans l'encoche du carter
- le corps principal comprend une âme creuse et est ainsi rendu déformable
- les extrémités libres du premier joint comprennent des bouchons empêchant l'introduction d'impuretés dans l'âme du joint
- le corps principal loge dans son âme creuse un matériau élastiquement déformable
- la portion centrale du premier joint comprend un corps secondaire à âme creuse et s'étendant le long du corps principal et une portion plane rattachant les deux corps l'un à l'autre et qui est destinée à être fixée au carter par un porte-joint, les deux corps principal et secondaire pointant vers des directions opposées
- la section du corps principal de la portion centrale est plus importante que la section du corps principal des portions latérales du premier joint
- selon un autre mode de réalisation, le corps principal du premier joint peut comprendre une portion pleine et constituée d'un matériau élastiquement déformable, le corps principal permettant d'assurer une étanchéité à un certain niveau de déformation
- selon encore un autre mode de réalisation, le corps principal comprend une portion en forme de lame souple à section en forme de V à branches symétriques ou asymétriques susceptible d'assurer une étanchéité lorsque les deux portions du V sont rabattues l'une contre l'autre
- le joint comprend des renforts sous la forme de plis internes
- le dispositif comprend un deuxième joint comprenant un corps principal sensiblement rectiligne destiné à fermer la forme de U du premier joint pour que le premier et deuxième joint longent le contour de la porte de vanne de décharge
- le joint est recouvert d'un tissu anti-friction pour limiter les frottements opérationnels sur les faces en contact, ainsi que l'érosion par les impuretés présentes dans le flux.
- le joint dispose de faces secondaires d'appui afin de maximiser la déviation de flux lorsque la porte est totalement ouverte.

L'invention concerne également une porte de vanne de décharge d'une turbomachine, destinée à être montée pivotante autour d'un axe entre une position d'obturation d'un orifice de passage d'air réalisé au sein d'un carter et une position d'ouverture de cet orifice, et comprenant un bord périphérique le long duquel est fixé un dispositif formant joint d'étanchéité du type ci-dessus.

L'invention concerne en outre une turbomachine, telle qu'un turboréacteur ou un turbopropulseur d'avion, qui comprend au moins une vanne de décharge du type ci-dessus.

### Présentation des figures

D'autres données, caractéristiques et avantages de la présente invention apparaîtront à la lecture de la description non limitée qui suit, en référence aux figures annexées qui représentent, respectivement :
- la figure 1, représente par une vue en perspective le premier joint d'étanchéité selon l'invention, à section en forme de U, vu de l'arrière de façon à mettre en évidence les protubérances devant s'engager dans des encoches complémentaires crées dans le carter
- la figure 2, représente par une vue de face le joint de la figure 1

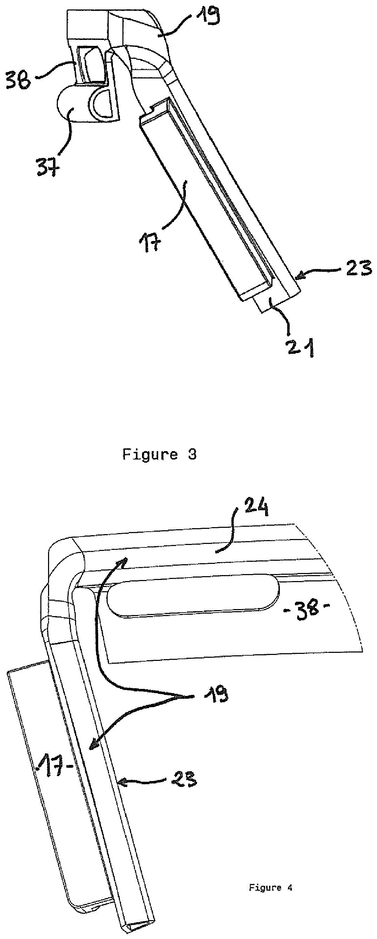

- la figure 3 illustre par une vue de côté le joint de la figure 1,
- la figure 4 montre partiellement le joint de la figure 1, vu de l'avant selon un angle permettant d'observer l'une des protubérances de face,
- la figure 5 représente le joint de la figure 1 fixé sur le carter d'une turbomachine vu de face complété du joint inférieur fermant le U,
- la figure 6 représente par une vue en coupe le premier joint et le carter de la figure 5, ainsi que le deuxième joint venant longer le bord inférieur de l'orifice du carter,
- la figure 7 représente par une vue en coupe réalisée le long de l'une des protubérance du premier joint, le premier joint fixé au carter par engagement de la protubérance au sein de l'encoche correspondante du carter,
- la figure 8 représente deux vues en coupe du premier joint fixé au carter réalisées selon la ligne A-A de la figure 7 et la ligne B-B de cette même figure,
- la figure 9 illustre une vue en coupe de la portion latérale du premier joint pourvue de la protubérance de fixation, en dehors du carter
- la figure 10 illustre une vue en coupe de la portion centrale du premier joint pourvue d'un corps principal et d'un corps secondaire creux, reliés l'un à l'autre par une partie plane sur laquelle vient s'appliquer un porte-joint,
- les figures 11a et 11b représentent vue de dessus respectivement deux variantes de réalisation pour l'encoche réalisée dans le carter de la turbomachine.

### Description détaillée d'un exemple de réalisation

L'invention concerne un dispositif perfectionné de joint d'étanchéité pour une vanne de décharge de compresseur de turboréacteur à double flux, vanne se présentant sous la forme d'une porte pivotante définissant un contour rectangulaire autorisant dans une position d'ouverture, la communication entre les flux primaire et secondaire d'un moteur aéronautique.

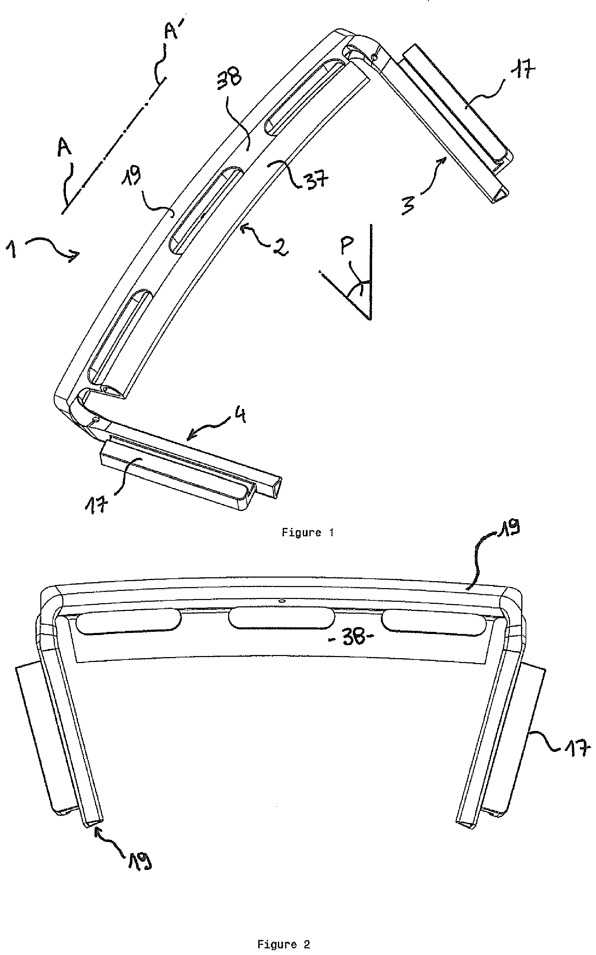

Comme visible sur la figure 1, le dispositif comprend un premier joint 1 présentant une forme générale de U :
- dont la portion centrale 2 s'étend suivant un axe principal AA',
- les portions latérales 3, 4 s'étendent aux extrémités de la portion centrale 2 en faisant un angle avec cette portion centrale,
- ce premier joint étant symétrique par rapport à un plan P perpendiculaire à l'axe principal.

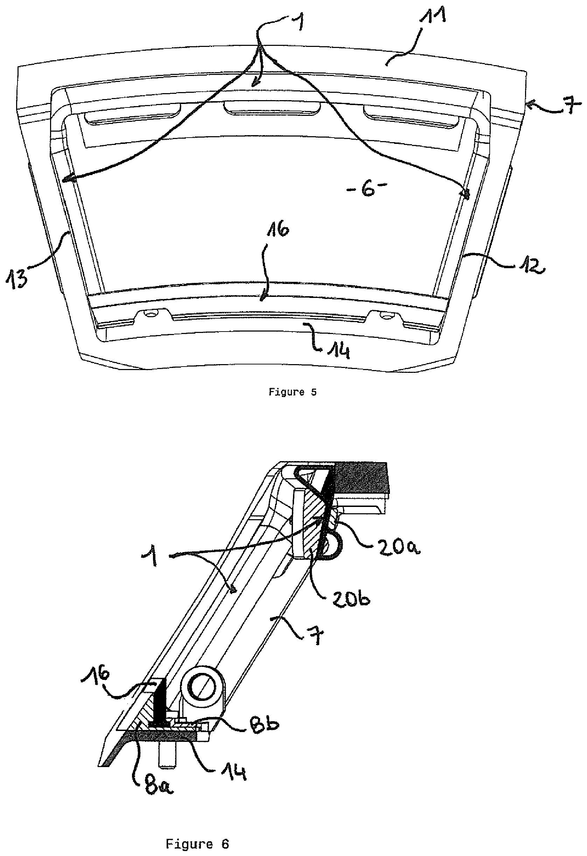

Ce premier joint 1 est destiné à s'appliquer, conformément à la figure 5, sur le rebord supérieur 11 et les deux rebords latéraux 12, 13 d'un orifice 6 sensiblement trapézoïdal réalisé dans un carter 7 du turboréacteur, qui explique l'angle de 80° existant entre chaque portion latérale 3, 4 et la portion centrale 2 du premier joint 1, le trapèze en question ayant sa base longue supérieure 11, et légèrement en recul vis-à-vis de sa base courte inférieure 14.

Un deuxième joint sensiblement rectiligne 16 visible en coupe sur la figure 6, vient s'installer dans un porte joint en deux parties 8, qui lui-même vient s'appliquer contre un rebord inférieur 14 de l'orifice réalisé dans le carter 7.

De façon classique, la portion centrale 2 du premier joint 1 et le deuxième joint 16 sont fixés au carter au moyen de portes joints, respectivement 20 en deux parties 20a, 20b sur la figure 6) et 8 (en deux parties 8a, 8b sur la figure 6).

Les portions latérales 3, 4 du premier joint 1 sont au contraire fixées de façon innovante au carter 7 par l'intermédiaire de protubérances 17 venant s'engager dans des encoches correspondantes 18 réalisées dans le carter.

Plus précisément, le premier joint 1 est formé par un corps principal creux 19 s'étendant sur l'ensemble de la forme de U du joint et à section transversale sensiblement triangulaire dont la base vient à reposer sur les rebords correspondants 11 à 13 de l'orifice 6 du carter 7.

Ces rebords du carter étant inclinés suivant des orientations différentes (sensiblement verticalement pour le rebord supérieur 11 conformément à la figure 6, et convergeant légèrement l'un vers l'autre à l'opposé de la porte pour les deux rebords latéraux 3, 4), les bases 21, 22 de la section triangulaire du corps creux présentent des orientations complémentaires de celles des rebords correspondants du carter 11-13.

A l'opposé de la base 21, 22 du corps principal creux, pointe l'un des sommets 23, 24 du triangle de la section transversale triangulaire, formant un bulbe creux, qui se retrouve écrasé et déformé par la porte de la vanne de décharge lors de sa fermeture.

C'est notamment sa forme creuse qui lui permet de se déformer suffisamment pour assurer une étanchéité alors qu'il n'est pas nécessairement compressible.

En effet, ce corps est choisi creux afin d'être suffisamment déformable pour assurer une étanchéité parfaite lorsque la porte est fermée, sans nécessiter l'emploi d'un système d'actionnement trop puissant, étanchéité parfaite indispensable pour obtenir les performances maximales de la turbine porte fermée.

Par ailleurs, les portions latérales du joint comprennent des bulbes à sections identiques, et moins importantes que celle du bulbe de la portion centrale 2.

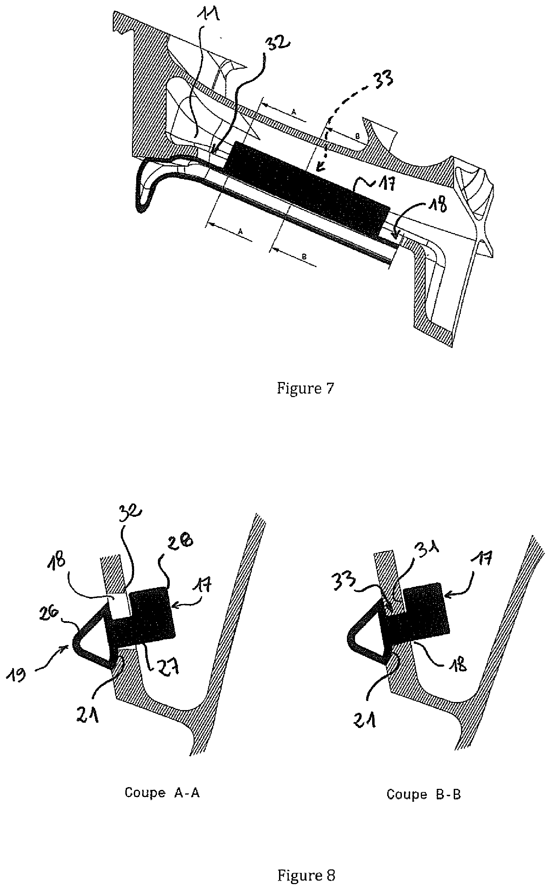

Au niveau du raccordement en forme de coude entre chaque portion latérale 3, 4 et la portion centrale 2, la section du bulbe du corps creux 19 évolue en dimensions entre la section importante de la portion centrale et celle moins importante des portions latérales (voir figure 7).

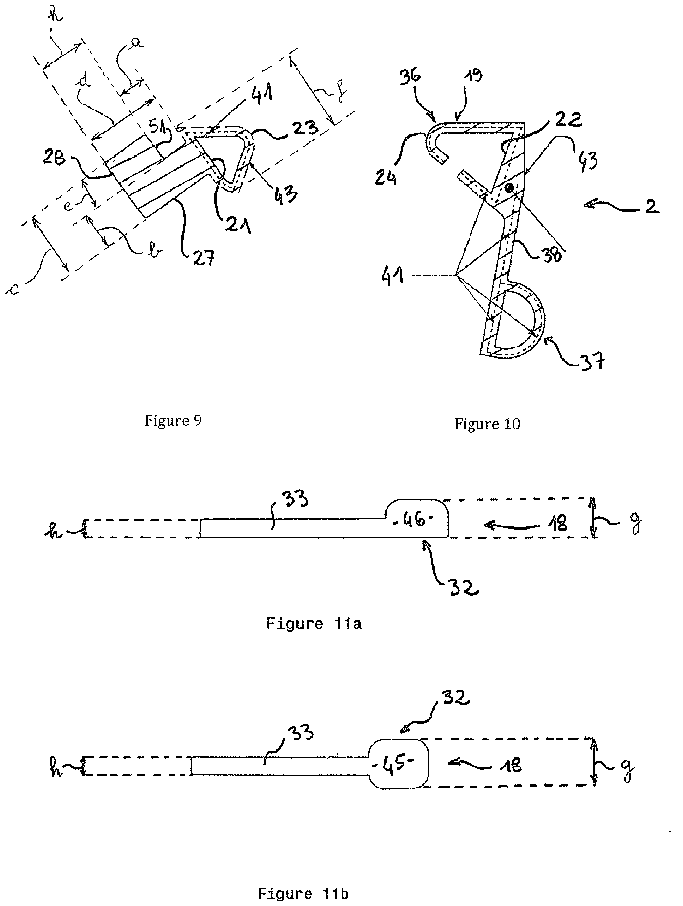

Comme visible sur la figure 8, la base 21 du corps creux de chaque portion latérale du premier joint est prolongée à l'opposé du petit bulbe 26 par la protubérance 17 qui présente en section transversale une forme générale de L dont la première branche 27 est perpendiculaire à la base 21 et la deuxième 28 parallèle à la base 21 en étant écarté de celle-ci d'une distance « a » repérée sur la figure 9.

Comme visible sur la figure 7, cette protubérance 17 s'étend sur une partie seulement de la portion latérale du premier joint, sur une longueur s'étendant à distance du coude du joint jusqu'à distance de l'extrémité de la portion latérale du joint.

Comme visible sur la figure 8 coupe B-B, la portion 28 de la protubérance vient en appui contre une portion de paroi 31 délimitant l'encoche 18, et forme un pied d'ancrage 28.

La forme asymétrique du pied (en forme de L) de la protubérance de fixation, permet de loger ce pied dans une zone interne au carter où l'espace disponible est faible tant l'encombrement est important. Bien entendu, toute autre forme par exemple en T permettant de définir une portion d'appui contre la paroi délimitant l'encoche, est possible.

Cette encoche présente une forme générale rectiligne avec une entrée 32 autorisant le passage par simple introduction de la protubérance 17 selon une direction normale au plan défini par le rebord 12, 13, (de forme par exemple circulaire) et un couloir rectiligne 33 suffisamment resserré pour bloquer la sortie du pied 28 de la protubérance, ce couloir 33 présentant en fait sensiblement la même largeur « b » que la portion 27 de la protubérance.

Dans l'exemple illustré, l'entrée 32 est située du côté du rebord supérieur 11 et se retrouve recouverte par le coude du premier joint lorsque ce dernier est correctement mis en place.

La protubérance 17 est donc introduite par l'extrémité avant de son pied 28 dans l'entrée 32 de l'encoche correspondante 32 puis cette extrémité avant est engagée dans le couloir resserré 33 de l'encoche 18 sous la paroi du carter pour y être bloquée.

L'entrée de l'encoche pourra, conformément aux figures 11a et 11b, présenter une forme adaptée à celle du pied de la protubérance et ainsi une forme carrée 45 centrée sur le couloir 33 lorsque le pied de la protubérance présente une forme de T, ou celle d'une encoche sensiblement rectangulaire, venant s'ajouter au couloir 33 lorsque le pied de la protubérance présente au contraire une forme de T.

Par ailleurs, la portion centrale 2 du premier joint présente une section transversale en forme générale de S qui définit, à l'opposé de son bulbe de corps creux à section importante 36, un bulbe secondaire 37 à section en forme de demi-cercle, dont le diamètre est relié à la base 22 du bulbe principal 36, par une portion plane 38 de premier joint.

Le bulbe secondaire 37 est destiné à maximiser le rendement du système d'extraction lorsque la porte est totalement ouverte.

Les bulbes à âme creuse 23, 36, 37 permettent de rendre possible de fortes amplitudes de déformation avec par exemple une compression de leur section de l'ordre de 80 voire 100%, même lorsque le matériau constitutif du joint n'est pas compressible (comme le caoutchouc renforcé ou non renforcé). L'âme creuse des bulbes autorise un degré de déformation que le matériau constitutif du joint n'autoriserait pas.

Par exemple, pour déformer un bulbe de 8 mm, une âme creuse d'une hauteur de 10 mm peut être prévue.

L'on adaptera les dimensions du bulbe (épaisseur de paroi et taille de l'âme creuse) en fonction de l'amplitude de déplacement nécessaire pour garantir un taux de compression adapté sur fermeture de la porte et ainsi l'étanchéité recherchée.

Pour protéger l'âme creuse du corps principal du joint, les extrémités inférieures des portions latérales sont munies de bouchons évitant l'introduction dans l'âme du joint, d'impuretés (sable ou eau).

Bien entendu, le corps creux du premier joint peut avoir une section constante, ou variable et par exemple plus importante aux endroits où l'effort de cisaillement crée lors de la fermeture de la porte, est plus important (car bien que l'axe de pivotement de la porte soit distinct de celui du joint, et permette une répartition relativement homogène de cet effort sur le joint, les extrémités inférieures de la partie de joint en forme de U, sont plus sollicitées que le reste de cette partie).

### Dimensions relatives

- Soit une encoche présentant, conformément à la figure 11, une entrée sensiblement circulaire 32 de diamètre « g », et un couloir 18 de largeur « h ». Le diamètre « g » de l'entrée 32 sera prévu légèrement supérieur au double de la largeur « h » du couloir (par exemple g = 8,5 ou 9 mm et h = 4mm)
- Le bulbe portant la protubérance présentera une largeur « f » légèrement plus importante que celle de l'entrée 32 de l'encoche, afin de la recouvrir lorsque le joint sera fixé au carter (par exemple f sur la figure 8 = 10 mm), et recouvrira nécessairement le couloir 18 sur toute sa largeur et sur toute sa longueur
- La hauteur « d » du pied sera légèrement supérieure à la largeur « f » du bulbe (par exemple d = 11, 7 mm)
- la distance « a » séparant la base du bulbe vis à vis de la surface 51 par laquelle le pied est en prise sous la paroi du carter est sensiblement égale à l'épaisseur du carter, par exemple a = 4 mm
- la largeur « c » de la longueur du pied (portion 28) est prévue légèrement moins importante que celle « f » du bulbe (par exemple c = 8 mm)
- la largeur « b » de la portion de pied traversant la paroi du carter, est prévue deux fois moins importante que la largeur « c » de la longueur du pied (par exemple b = 4 mm),
- la longueur « e » de la surface 51 par laquelle le pied est en prise sous la paroi du carter est sensiblement égale à la largeur « b » de la portion de pied traversant la paroi du carter (par exemple e = 4 mm)

La largeur « e » de la surface de prise 51 du pied et la hauteur « h » de la portion 28 du pied, peuvent être modulées en fonction de la rigidité à atteindre pour le pied (en augmentant ces valeurs, on augmente la quantité de matière et la rigidité) ou au contraire, maintenues à des valeurs minimales (par exemple e=b=h) si des renforts de plis sont prévus au sein du pied.

Dans ce qui précède, l'expression « légèrement supérieur ou « inférieur » s'entend comme une différence de l'ordre de 5 à 20%.

Selon un mode de réalisation non illustré, la portion de pied s'étendant sur la hauteur « a » traversant la paroi du carter, peut présenter une forme sensiblement complémentaire de celle de l'encoche de la figure 11a ou 11b et comprendre ainsi une tête de blocage dans l'encoche épousant la forme circulaire de l'entrée 32 de l'encoche et empêchant la translation de la portion latérale du joint dans l'encoche.

Selon le mode de réalisation illustré sur la figure 7, le pied peut au contraire présenter une longueur moins importante que celle de l'encoche et le bulbe de joint viendra recouvrir l'encoche de part et d'autre du pied. Le blocage en translation de cette portion latérale de joint sera permis par le blocage par le porte joint de la portion centrale du joint.

### Matériaux constitutifs

Le matériau constitutif de ce joint peut être un élastomère, tel que du silicone, et présentant de préférence des propriétés auto-extinguibles.

Comme visible sur la figure 9 ou 10, le bulbe de chaque portion du premier joint comprend des plis de renforts améliorant sa rigidité tout en autorisant sa déformation.

La portion centrale 2 du premier joint comprend également des renforts sous la forme de plis 41 s'étendant dans l'épaisseur de sa portion plane 38 et dans celle du bulbe secondaire 37.

Ces plis ou renforts 41 peuvent être en tissu polyester, ce qui présente l'avantage d'armer le joint pour lui donner de la résistance dans des zones préférentielles (on peut prévoir deux plis parallèles dans l'épaisseur du pied de la protubérance pour le rendre d'autant plus rigide, et un seul pli dans le bulbe 19 du corps creux pour qu'il soit rigidifié tout en conservant une certaine souplesse).

Le tissu polyester présente par ailleurs des avantages en terme de coût de la matière.

D'autres types de renforts peuvent également être utilisés tels que des fibres de carbone ou de verre ou de céramique, mais avec une quantité mesurée dans les bulbes des corps creux, pour éviter de trop les rigidifier et gêner leur déformation.

L'ensemble de ces renforts peuvent être présents sous forme de renforts textiles souples et/ou de composites rigides.

Ce premier joint est par ailleurs revêtu d'un tissu anti-friction 43 qui limite les frottements au bénéfice de l'énergie de fermeture de la porte de la vanne. Sa présence est d'autant plus bénéfique pour le premier joint selon l'invention lorsque celui-ci est constitué de silicone qui présente un caractère fort en friction. Revêtir le silicone du joint par un tissu anti-friction permet ainsi le glissement sans effort du bord périphérique de la porte le long des bulbes des joints. Egalement, ce tissu anti-friction permet d'atteindre des faibles taux d'usure pour ce joint, et le protège contre l'abrasion pouvant être provoquée par la présence de sable, ou de cristaux de glace dans l'environnement de la vanne.

### Procédé de fabrication

Le premier joint présentant une forme générale de U avec plis intégrés, peut être obtenu par moulage.

Ces plis sont initialement découpés et disposés dans un outillage de moulage comprenant une cavité de la forme finale désirée pour le premier joint. Ces plis sont enduits de silicone pour conférer au joint sa forme de base. Le moule est fermé en vue de la vulcanisation du silicone, à une température et une pression prédéterminées connues par un homme du métier.

Selon un autre mode de réalisation non illustré, le bulbe du premier joint peut comprendre une âme pleine constituée d'un matériau compressible plus adapté aux pièces de très grandes dimensions. Par exemple, ce bulbe plein peut être constitué d'une mousse compressible revêtue d'un tissu anti friction.

Ou selon encore un autre mode de réalisation, le premier joint peut comprendre à la place d'un bulbe proéminent, une lame souple à section en forme de V dont les deux portions sont rabattues l'une contre l'autre sur fermeture de la porte contre les rebords de l'orifice du carter.

Dans ces deux dernières variantes, le premier joint sera toujours muni de protubérances permettant sa fixation au carter.

Le dispositif formant joint d'étanchéité tel que décrit ci-dessus est particulièrement adapté aux vannes pour turbines à double flux mais peut tout à fait équiper les vannes de turbines à simple flux, que les portes de ces vannes se ferment « à plat » sur le joint ou par un système de pivotement.

Il peut également convenir aux portes de décharge qui protègent un système contre la surpression (par exemple les turbines industrielles dont les portes sont constituées par un système à clapet « tout ou rien » qui évite la surpression dans la turbine).

Ces portes peuvent être réalisées en matériaux métalliques, composites ou plastiques.

## Revendications

1. Dispositif formant joint d'étanchéité pour une vanne de décharge dans une turbomachine,
la vanne comprenant :
- une porte destinée à être montée mobile entre une position d'obturation d'un orifice de passage d'air réalisé au sein d'un carter de la turbomachine et une position d'ouverture de cet orifice,
le dispositif comprenant :
- un ensemble de joint d'étanchéité s'étendant le long du bord périphérique de la porte dans sa position d'obturation, le joint comprenant :
∘ un corps principal (19) destiné à s'interposer pendant l'utilisation de façon étanche entre le bord périphérique de la porte dans sa position de fermeture et le rebord de l'orifice du carter et
∘ au moins une protubérance de fixation (17) s'étendant à partir d'au moins une portion du corps principal (19) et participant à la fixation du joint sur le carter du moteur,
∘ ladite protubérance (17) étant destinée à s'engager pendant l'utilisation dans une encoche correspondante (18) réalisée dans le carter.

2. Dispositif selon la revendication 1, dans lequel l'ensemble de joint d'étanchéité comprend un premier joint (1) comprenant un corps principal en forme de U (19) et dont les deux portions latérales opposées sont prolongées chacune par une protubérance de fixation (17).

3. Dispositif selon la revendication 2, dans lequel la protubérance (17) s'étend sur une partie seulement des deux portions latérales (3, 4) du premier joint (1).

4. Dispositif selon l'une des revendications précédentes, dans lequel la protubérance (17) présente en section transversale une forme de L ou de T dont les portions latérales sont destinées à venir en prise sous une paroi correspondante du carter.

5. Dispositif selon l'une des revendications précédentes, dans lequel la protubérance (17) comprend une portion élargie empêchant le coulissement du joint dans l'encoche du carter

6. Dispositif selon l'une des revendications 2 à 5, dans lequel le corps principal (19) comprend une âme creuse et est ainsi rendu déformable.

7. Dispositif selon la revendication 6, dans lequel les extrémités libres du premier joint comprennent des bouchons empêchant l'introduction dans l'âme du joint, d'impuretés.

8. Dispositif selon l'une des revendications 2 à 7, dans lequel le corps principal (19) loge dans son âme creuse un matériau élastiquement déformable.

9. Dispositif selon l'une des revendications 2 à 8, dans lequel la portion centrale (2) du premier joint comprend un corps secondaire (37) s'étendant le long du corps principal (19) et une portion plane (38) rattachant les deux corps principal et secondaire l'un à l'autre, et destinée à être fixée au carter par un porte-joint, les deux corps principal et secondaire pointant vers des directions opposées, le corps secondaire (37) définissant des faces secondaires d'appui afin de maximiser la déviation de flux lorsque la porte est totalement ouverte.

10. Dispositif selon l'une des revendications 2 à 9, dans lequel la section du corps principal de la portion centrale (2) est plus importante que la section du corps principal des portions latérales.

11. Dispositif selon l'une des revendications 1 à 5, dans lequel le corps principal comprend une portion pleine et constituée d'un matériau élastiquement déformable, le corps principal permettant d'assurer une étanchéité à un certain niveau de déformation

12. Dispositif selon l'une des revendications 1 à 5, dans lequel le corps principal comprend une portion en forme de lame souple à section en forme de V à branches symétriques ou asymétriques susceptible d'assurer une étanchéité lorsque les deux portions du V sont rabattues l'une contre l'autre.

13. Dispositif selon l'une des revendications précédentes, dans lequel le joint est recouvert d'un tissu anti-friction pour limiter les frottements opérationnels sur les faces en contact, ainsi que l'érosion par les impuretés présentes dans le flux et/ou comprend des renforts dans son épaisseur.

14. Porte de vanne de décharge dans une turbomachine, destinée à être montée mobile entre une position d'obturation d'un orifice de passage d'air réalisé au sein d'un carter et une position d'ouverture de cet orifice, et comprenant un bord périphérique le long duquel est fixé un dispositif formant joint d'étanchéité selon l'une des revendications précédentes.

15. Turbomachine, telle qu'un turboréacteur ou un turbopropulseur d'avion, **caractérisée en ce qu'**elle comprend au moins une porte de vanne de décharge selon la revendication précédente.

## Patentansprüche

1. Vorrichtung, welche eine Dichtung für ein Ablassventil in einer Strömungsmaschine bildet, wobei das Ventil folgendes umfasst:
- eine Klappe, die dazu bestimmt ist, zwischen einer geschlossenen Position in Bezug auf eine Luftdurchlassöffnung in einem Gehäuse der Strömungsmaschine und einer geöffneten Position in Bezug auf diese Öffnung beweglich montiert zu werden, wobei die Vorrichtung folgendes umfasst:
- eine Dichtungsbaugruppe, die sich um den äußeren Rand der Klappe in Schließposition erstreckt, wobei die Dichtung folgendes umfasst:
- einen Hauptkörper (19), der sich während der Benutzung in Schließposition abdichtend zwischen den äußeren Rand der Klappe und die Kante der Gehäuseöffnung positioniert, und
- mindestens einen Befestigungsvorsprung (17), der sich von mindestens einem Abschnitt des Hauptkörpers (19) aus erstreckt und zur Befestigung der Dichtung auf dem Motorgehäuse beiträgt,
- wobei besagter Vorsprung (17) dazu bestimmt ist, während der Benutzung in eine im Gehäuse eingearbeitete passende Kerbe (18) einzugreifen.

2. Vorrichtung nach Anspruch 1, in welcher die Dichtungsbaugruppe eine erste Dichtung (1) umfasst, welche einen u-förmigen Hauptkörper (19) enthält, und deren beide gegenüberliegende seitliche Abschnitte jeweils durch einen Befestigungsvorsprung (17) verlängert werden.

3. Vorrichtung nach Anspruch 2, in welcher sich der Vorsprung (17) nur über einen Teil der beiden seitlichen Abschnitte (3, 4) der ersten Dichtung (1) erstreckt.

4. Vorrichtung nach einem der vorhergehenden Ansprüche, in welcher der Vorsprung (17) einen L- oder T-förmigen Querschnitt aufweist, dessen seitliche Abschnitte unter einer entsprechenden Wand des Gehäuses in Eingriff gebracht werden.

5. Vorrichtung nach einem der vorhergehenden Ansprüche, in welcher der Vorsprung (17) einen erweiterten Abschnitt enthält, welcher verhindert, dass sich die Dichtung in die Kerbe des Gehäuses schiebt.

6. Vorrichtung nach einem der Ansprüche 2 bis 5, in welcher der Hauptkörper (19) einen hohlen Kern enthält und somit verformbar ist.

7. Vorrichtung nach Anspruch 6, in welcher die freien Enden der ersten Dichtung Kappen enthalten, die verhindern, dass Verunreinigungen in den Kern der Dichtung gelangen.

8. Vorrichtung nach einem der Ansprüche 2 bis 7, in welcher der hohle Kern des Hauptkörpers (19) ein elastisch verformbares Material enthält.

9. Vorrichtung nach einem der Ansprüche 2 bis 8, in welcher der mittlere Abschnitt (2) der ersten Dichtung einen Nebenkörper (37) enthält, welcher sich entlang des Hauptkörpers (19) erstreckt, und einen ebenen Abschnitt (38), welcher den Haupt- und den Nebenkörper miteinander verbindet, und dazu bestimmt ist, am Gehäuse durch einen Dichtungsträger befestigt zu werden, wobei der Hauptkörper und der Nebenkörper in entgegengesetzte Richtungen zeigen, wobei der Nebenkörper (37) sekundäre Auflageflächen abgrenzt, um die Umlenkung des Stroms zu optimieren, wenn die Klappe komplett geöffnet ist.

10. Vorrichtung nach einem der Ansprüche 2 bis 9, in welcher der Querschnitt des Hauptkörpers des mittleren Abschnitts (2) größer ist als der Querschnitt des Hauptkörpers der seitlichen Abschnitte.

11. Vorrichtung nach einem der Ansprüche 1 bis 5, in welcher der Hauptkörper einen gefüllten Abschnitt bestehend aus einem elastisch verformbaren Material enthält, wobei der Hauptkörper die Dichtheit bis zu einem bestimmten Verformungsgrad gewährleistet.

12. Vorrichtung nach einem der Ansprüche 1 bis 5, in welcher der Hauptkörper einen Abschnitt in Form einer biegsamen Lamelle mit v-förmigem Querschnitt und symmetrischen oder asymmetrischen Schenkeln umfasst, die die Dichtheit gewährleisten, wenn die beiden Abschnitte des v-förmigen Abschnitts zueinander geklappt werden.

13. Vorrichtung nach einem der vorhergehenden Ansprüche, in welcher die Dichtung mit einem Anti-Friktion-Gewebe überzogen ist, um die Reibungen an den Kontaktflächen während des Betriebs sowie die Abnutzung durch Verunreinigungen im Strom zu begrenzen, und/oder die über die Dicke hinweg verstärkt sind.

14. Ablassventilklappe in einer Strömungsmaschine, die dazu bestimmt ist, zwischen einer geschlossenen Position in Bezug auf eine Luftdurchlassöffnung in einem Gehäuse und einer offenen Position in Bezug auf diese Öffnung beweglich montiert zu werden, und einen umlaufenden Rand enthält, an dem eine Vorrichtung befestigt ist, welche eine Dichtung gemäß einem der vorhergehenden Ansprüche bildet.

15. Strömungsmaschine, wie zum Beispiel eine Strahlturbine oder ein Turbo-Propeller-Triebwerk, **dadurch gekennzeichnet, dass** sie mindestens eine Ablassventilklappe nach dem vorhergehenden Anspruch enthält.

## Claims

1. A device forming a seal for a relief valve in a turbine engine,
with said valve comprising:
- a gate intended to be mounted mobile between a position for sealing an air port provided within a casing of the turbine engine and a position for opening said port,
with said device comprising:
- a seal assembly extending along the peripheral edge of the gate in the sealing position thereof, with the seal comprising:
* a main body (19) intended to be sealingly inserted, in operation, between the peripheral edge of the gate in the sealing position thereof and the rim of the port of the casing, and
* at least one attachment projection (17) extending from at least one portion of the main body (19) and involved in the attachment of the seal to the casing of the engine,
* said projection (17) being intended to be inserted, in operation, into a matching notch (18) provided in the casing.

2. A device according to claim 1, wherein the seal assembly comprises a first seal (1) comprising a U-shaped main body (19) and the two opposite side portions of which are each extended by an attachment projection (17).

3. A device according to claim 2, wherein the projection (17) extends over only a part of the two side portions (3, 4) of the first seal (1).

4. A device according to one of the preceding claims, wherein the projection (17) has an L-shaped or T-shaped cross-section, the side portions of which are intended to engage under a matching wall of the casing.

5. A device according to one of the preceding claims, wherein the projection (17) comprises a widened portion preventing the sliding of the seal in the notch of the casing.

6. A device according to one of claims 2 to 5, wherein the main body (19) comprises a hollow core and is thus made deformable.

7. A device according to claim 6, wherein the free ends of the first seal comprise plugs preventing impurities from being introduced into the core of the seal.

8. A device according to one of claims 2 to 7, wherein the main body (19) accommodates an elastically deformable material in its hollow core.

9. A device according to one of claims 2 to 8, wherein the central portion (2) of the first seal comprises a secondary body (37) which extends along the main body (19) and a planar portion (38) which connects the two main and secondary bodies to each other, and intended to be attached to the casing by a seal holder, with the two main and secondary bodies pointing to opposite directions, with the secondary body (37) defining secondary bearing faces so as to maximize the flow deviation when the gate is fully open.

10. A device according to one of claims 2 to 9, wherein the section of the main body of the central portion (2) is larger than the section of the main body of the side portions.

11. A device according to one of claims 1 to 5, wherein the main body comprises a solid portion consisting of an elastically deformable material, with the main body making it possible to provide sealing for a certain extent of deformation.

12. A device according to one of claims 1 to 5, wherein the main body comprises a portion having the shape of a flexible leaf, with a V-shaped section with symmetrical or asymmetrical branches capable of providing sealing when the two branches of the V are folded one on the other.

13. A device according to one of the preceding claims, wherein the seal is covered with an anti-friction material so as to limit the operational friction on the faces in contact, as well as the erosion caused by the impurities present in the flow and/or comprises reinforcements in the thickness.

14. A gate of a relief valve in a turbine engine intended to be mounted mobile between a position for sealing an air port provided within a casing and a position for opening said port, and comprising a peripheral edge along which a device forming a seal, according to one of the preceding claims, is attached.

15. A turbine engine, such as a turbojet or a turboprop of an aircraft, **characterized in that** it comprises at least one gate of the relief valve according to the preceding claim.
